# EUROPÄISCHE PATENTANMELDUNG

(11) **EP 0 560 412 A2**
(43) Veröffentlichungstag der Anmeldung: **15.09.1993**
(21) Anmeldenummer: 93108783.7
(22) Anmeldetag: 08.03.1988
(51) Int. Cl.: G01J 3/18, G02B 6/34, G02B 6/12

(54) **Anordnung für ein integriert-optisches Spektrometer und Verfahren zur Herstellung eines solchen Spektrometers**

(30) Priorität: 16.03.1987 DE 3708526
(62) Teilanmeldung aus: 88103634.7
(71) Anmelder: SIEMENS AKTIENGESELLSCHAFT, D-80333 München (DE)
(72) Erfinder: Cremer, Cornelius, Dr.rer.nat., D-85586 Poing (DE); März, Reinhard, Dr.phil.nat., W-8000 München 80 (DE)

(57) **Zusammenfassung**

Bei Anordnungen für ein integriert-optisches Spektrometer mit einem optischen Schichtwellenleiter und einem fokussierenden optischen Gitter mußten bisher Gitter mit Chirp verwendet werden. Es soll eine neue Anordnung angegeben werden, bei der Gitter mit fester Gitterkonstante verwendet und dadurch Justier- und Konstrastprobleme vermieden werden können.

Bei der neuen Anordnung ist das fokussierende optische Gitter (110,120) auf einer eine Stufe definierenden, längsseitigen Begrenzungsfläche (11,12) eines Rippenwellenleiters (10) ausgebildet, an den der Schichtwellenleiter (20) wenigstens auf einer Längsseite des Rippenwellenleiters (10) grenzt. Bei Verwendung eines Gitters (110,120) mit fester Gitterkonstante (a) ist der Rippenwellenleiter entsprechend einer logarithmischen Spirale gekrümmt. Andernfalls müssen ein Chirp eines Gitters und die Kurvenform des Rippenwellenleiters aufeinander abgestimmt werden. Ein Verfahren zur Herstellung der neuen Anordnung wird angegeben.

## Beschreibung

Anordnung für ein integriert-optisches Spektrometer und Verfahren zur Herstellung eines solchen Spektrometers

Die vorliegende Erfindung betrifft eine Anordnung für eine integriert-optisches Spektrometer nach dem Oberbegriff des Patentanspruchs 1 und ein Verfahren zur Herstellung einer solchen Anordnung.

Für Wellenlängen-Multiplexer und -Demultiplexer in der optischen Nachrichtentechnik und auch für Sensoranwendungen sind Anordnungen für integriert-optische Spektrometer, d. h. Bauteile die das Licht verschiedener Wellenlängen auf verschiedene Punkte fokussieren, von Interesse. Eine Anordnung der eingangs genannten Art ist beispielsweise aus IEE Proceedings, Vol. 131, Pt. H. No. 5, Oktober 1984, Seiten 290 bis 294 bekannt. Bei dieser Anordnung sind an eine Stirnfläche eines Schichtwellenleiters eine Eingangsfaser und mehrere Ausgangsfasern stoßgekoppelt. Auf der gegenüberliegenden Stirnfläche dieses Schichtwellenleiters ist ein fokussierendes optisches Gitter angeordnet, dessen Gitterlinien im wesentlichen vertikal zur Ebene des Schichtwellenleiters verlaufen. Die Gitterkonstante des Gitters ist nicht fest sondern variiert. Derartige Gitter sind als "Gitter mit Chirp" bekannt. Die variierende GitterKonstante bzw. der Chirp ist so gewählt, daß eine bestimmte Wellenlänge aus der Eingangsfaser auf eine bestimmte Ausgangsfaser fokussiert wird.

Aufgabe der Erfindung ist es, eine neuartige Anordnung der eingangs genannten Art anzugeben, bei der auch Gitter mit fester Gitterkonstante verwendet werden können und dadurch Justier- und Konstrastprobleme vermieden werden können.

Diese Aufgabe wird durch die im kennzeichnenden Teil des Patentanspruchs 1 angegebenen Merkmale gelöst.

Die erfindungsgemäße Anordnung ist ein ersteer Vorschlag für ein integriert-optisches Spektrometer, bei dem das gebeugte Licht aus einem Rippenwellenleiter in einen Schichtwellenleiter einkoppelbar ist und dort das Licht verschiedener Wellenlängen auf verschiedene Punkte fokussierbar ist. Durch den planaren Aufbau kann das Problem der Fokussierung von dem bekannten Chirp des Gitters auf einen gekrümmten Verlauf des Rippenwellenleiters verlagert werden. Damit können Justierprobleme bei einer holographischen Gittererzeugung vermieden werden, da sowohl die Definition der Fokalpunkte als auch die Plazierung weiterer Bauteile, beispielsweise von Fotodioden, an diesen Fokalpunkten durch Maskenbelichtung realisiert werden können.

Die Wirkungsweise der erfindungsgemäßen Anordnung beruht auf der Lichtbeugung an einem Gitter. Sie wird für eine gegebene Wellenlänge im wesentlichen durch die Auskoppelrichtungen und die Koppelkoeffizienten für die verschiedenen Beugungsordnungen charakterisiert (siehe dazu Appl. Phys. 14 (1977) Seiten 235 bis 254).

Speziell liegt bei einem Strahlungseinfall aus einer Ebene, zu der die Gitterlinien im wesentlichen senkrecht stehen, auch die Auskoppelrichtung, in der das Licht gebeugt wird, in dieser Ebene. Auf einen Rippenwellenleiter angewendet bedeutet dies, daß ein Gitter in oder auf den längsseitigen Begrenzungsflächen des Rippenwellenleiters, welche seitliche Flanken bzw. Stufen des Wellenleiters bilden, im wesentlichen zur Auskopplung in den seitlich angrenzenden Schichtwellenleiter führt. Diese Einschätzung kann aus der Tatsache begründet werden, daß der Schichtwellenleiter im Nahfeld der üblicherweise als Furchen ausgebildeten Gitterlinien in den längsseitigen Begrenzungsflächen des Rippenwellenleiters ansetzt, wo die Phasenfronten noch parallel zu den Furchen verlaufen.

Ist überdies der Schichtwellenleiter nur auf einer Längsseite und nicht auch auf der anderen Längsseite des Rippenwellenleiters vorhanden (Anspruch 2), so kann für einen bestimmten Bereich von Gitterkonstanten keine Energie auf die Seite des Rippenwellenleiters abgestrahlt werden, auf der sich kein Schichtwellenleiter befindet.

Eine Abschätzung des Koppelkoeffizienten nach den Formeln von Tamir et al (siehe genannte Literaturstelle Appl. Phys.) zeigt, daß die Kopplung für 0,1 µm Korrugationstiefe in der Größenordnung von 0,5/mm für InGaAsP liegen sollte.

Die aus dem Rippenwellenleiter seitlich ausgekoppelte Strahlungsenergie wird für unterschiedliche Wellenlängen in unterschiedliche Richtungen abgestrahlt. Die im Anspruch 3 angegebene bevorzugte Ausführungsform der erfindungsgemäßen Anordnung beruht auf der Erkenntnis, daß der Rippenwellenleiter, der üblicherweise eine konstante Breite aufweist, so gekrümmt werden kann, daß für eine bestimmte Wellenlänge λ₀ die unter einem zugeordneten Winkel α₀ abgestrahlte Energie auf einen Fokalpunkt F₀ fokussiert wird. Die Kurvenform, die dies für äquidistante Gitterlinien entlang des Rippenwellenleiters leistet, ist die logarithmische Spirale. Ihr Ursprung ist der genannte Fokalpunkt F₀ der Strahlung bei der Wellenlänge λ₀. Für Gitter mit fester Gitterkonstante a wird durch die Krümmung des Rippenwellenleiters ein leichter Chirp verursacht, der durch eine Veränderung der Kurvenform korrigiert werden kann.

Die erfindungsgemäße Anordnung ist nicht auf eine logarithmische Spirale begrenzt. Prinzipiell ist jede Kurvenform zulässig. Zu jeder gewählten Kurvenform muß dann jedoch ein Gitter mit einem zugeordneten Chirp verwendet werden, bei dem dann die gleichen Verhältnisse vorliegen, wie bei einem Gitter mit fester Gitterkonstante auf einer logarithmischen Spirale.

Der besondere Vorteil der erfindungsgemäßen Anordnung liegt jedoch gerade auch darin, daß Gitter mit fester Gitterkonstante verwendet werden können. Ihr Aufbau ist planar, wodurch die Integration von Fotodioden, Wellenleitern usw. möglich ist.

Die Ansprüche 4 und 5 geben weitere bevorzugte Ausgestaltungen der erfindungsgemäßen Anordnung an.

Ein besonders vorteilhaftes Verfahren zur Herstellung einer erfindungsgemäßen Anordnung ist im Anspruch 9 angegeben, dessen Grundlage in einem neuartigen Verfahren zur Herstellung eines Gitters auf einer seitlichen Begrenzungsfläche eines Streifen- oder Schichtwellenleiters ist, das im Anspruch 6 angegeben ist. Dieses neuartige Verfahren wurde bei Überlegungen erfunden, wie eine erfindungsgemäße Anordnung möglichst einfach und ohne die Notwendigkeit einer mechanischen Bearbeitung eines Substrats hergestellt werden kann. Dieses Verfahren beruht auf der Erkenntnis, daß beim Übertragen eines Oberflächengitters durch Ätzen, insbesondere durch Trockenätzen, sich dieses Gitter auch auf Stufen oder Flanken überträgt, die beim Ätzvorgang entstehen und höherliegende maskierte Bereiche des Oberflächengitters von den in die Tiefe übertragenen Bereiche trennen.

Bevorzugte Ausgestaltungen des Verfahrens nach Anspruch 6 gehen aus den Ansprüchen 7 und 8 hervor.

Anspruch 10 gibt eine bevorzugte Ausgestaltung des speziellen Verfahrens nach Anspruch 9 an, wobei es zweckmäßig ist, wie im Anspruch 11 angegeben, vorzugehen.

Ein erfindungsgemäßes Verfahren, insbesondere die Verfahren nach Anspruch 10 oder 11, eignen sich für die Herstellung von Anordnungen in InGaAsP. Zweckmäßig ist es dabei, wenn die für den Rippen- und Schichtwellenleiter vorgesehene Schicht aus InGaAsP und die Deckschicht und eine vorhandene Zwischenschicht aus InP besteht (Anspruch 12).

Durch das erfindungsgemäße Verfahren nach Anspruch 6 lassen sich auch Anordnungen für ein integriert optisches Spektrometer von der Art herstellen, wie sie in der eingangs genannten Literaturstelle IEE Proc. angegeben sind, wobei sich die nach dem erfindungsgemäßen Verfahren hergestellten Anordnungen von den bekannten Anordnungen durch die im kennzeichnenden Teil des Patentanspruchs 13 angegebenen Merkmale unterscheiden.

Die Ansprüche 14 und 15 geben bevorzugte Ausgestaltungen der erfindungsgemäßen Anordnung nach Anspruch 13 an.

Die Erfindung wird in der nun folgenden Beschreibung anhand der Figuren näher erläutert. Von den Figuren zeigen:
- Figur 1: eine Draufsicht auf eine schematisch dargestellte Anordnung, die aus einem gekrümmten Rippenwellenleiter und einem angrenzenden Schichtwellenleiter besteht,
- Figuren 2a bis 2e: in perspektivischer Darstellung und im Schnitt fünf Verfahrensstufen bei der Herstellung einer Anordnung nach Figur 1, und
- Figur 3: eine Draufsicht auf eine Anordnung mit einem Schichtwellenleiter allein.

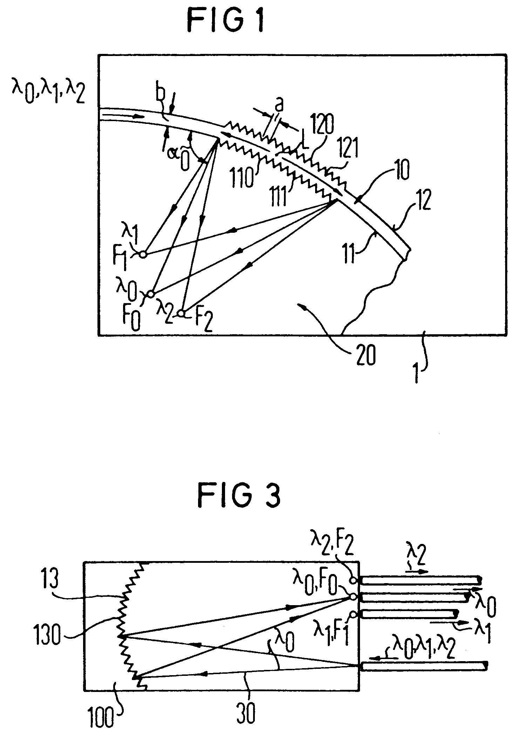

Bei der in Figur 1 dargestellten Anordnung sind der Rippenwellenleiter 10 und der auf einer Längsseite angrenzende Schichtwellenleiter 20 auf einem gemeinsamen Substrat 1 angeordnet. Die Ebene des Schichtwellenleiters 20 und auch des Rippenwellenleiters 10 ist parallel zur Zeichenebene. Der Rippenwellenleiter 10 verläuft in der genannten Ebene gekrümmt und weist zwei längsseitige Begrenzungsflächen 11 und 12 auf, die Stufen oder Flanken definieren.

Auf jeder längsseitigen Begrenzungsfläche 11 und 12 ist je ein Gitter 110 bzw. 120 ausgebildet, dessen Gitterlinien 111 bzw. 121 in Form von Furchen senkrecht zur Zeichenebene verlaufen. Die beiden Gitter 110 und 120 stehen einander gegenüber und haben eine Länge L. Die Gitterkonstante a beider Gitter 110, 120 ist fest.

An den Rippenwellenleiter 10 grenzt auf der Längsseite, auf der sich die Begrenzungsfläche 11 befindet, der Schichtwellenleiter 20 an, beispielsweise über der ganze Länge des Rippenwellenleiters 10.

Die zu trennenden Wellenlängen, beispielsweise die Wellenlänge λ₀, λ₁, λ₂ werden in den Rippenwellenleiter 10 über eine seiner stirnseitigen Enden, beispielsweise das Ende 101 eingekoppelt, und längs dieses Wellenleiters 10 zu den Gittern 110 und 120 geführt.

Der Rippenwellenleiter 10 ist so gekrümmt, daß für eine bestimmte Wellenlänge, beispielsweise die Wellenlänge λ₀, die unter einem Winkel α₀ abgestrahlte Energie auf einen Fokalpunkt F₀ fokussiert wird, bei dem ein Detektor oder das Ende eines Wellenleiters, beispielsweise einer Faser, angeordnet sein kann. Die Kurvenform, die dies für äquidistante Gitterfurchen entlang des Rippenwellenleiters 10 leistet, ist die logarithmische Spirale. Ihr Ursprung ist der Fokalpunkt F₀ der Strahlung bei der bestimmten Wellenlänge λ₀. Die logarithmische Spirale wird von den vom Ursprung F₀ ausgehenden Strahlen immer unter dem gleichen Winkel geschnitten.

Die von der bestimmten Wellenlänge λ₀ verschiedenen Wellenlängen, beispielsweise die Wellenlängen λ₁ und λ₂, werden in anderen Fokalpunkten F₁ bzw. F₂ fokussiert, in denen ebenfalls ein Detektor oder das Ende eines Lichtwellenleiters angeordnet sein kann.

Die in Figur 1 dargestellte Anordnung kann in InGaAsP beispielsweise folgendermaßen hergestellt werden:
Auf ein Substrat 1 aus InP wird eine 0,7 µm dicke Schicht 2 aus In₀,₈₉Ga₀,₁₁As₀,₂₄P₀,₇₆, eine 0,2 µm dicke Zwischenschicht 3 aus InP, eine 0,2 µm dicke Schicht 4 aus In₀,₈₉Ga₀,₁₁As₀,₂₄P₀,₇₆ und schließlich eine 0,2 µm dicke Deckschicht 5 aus InP epitaktisch aufgewachsen. Sowohl die 0,7 µm dicke Schicht 2 aus InGaAsP als auch das 1,1 µm dicke Schichtpaket aus der 0,7 µm dicken Schicht 2, der 0,2 µm dicken Zwischenschicht 3 und der 0,2 µm dicken Schicht 4 sind monomodig.

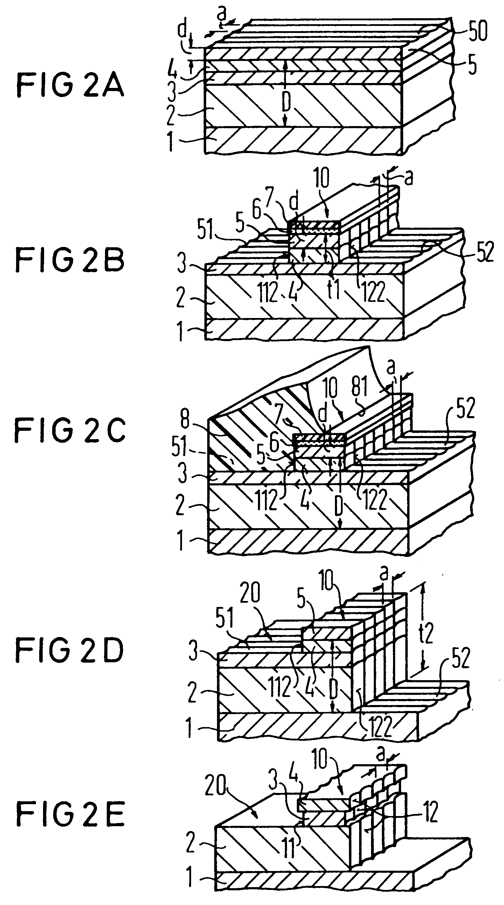

In die Deckschicht 5 wird nach bekannten technologischen Verfahren, beispielsweise ein Oberflächengitter 50 geätzt, wonach die in Figur 2a dargestellte Verfahrensstufe entsteht.

Auf dieses Oberflächengitter 50 wird eine Al₂O₃-Schicht als Trockenätzmaske aufgebracht. Ein Fotolackstreifen von beispielsweise 1 µm Breite wird als nächstes fotolithografisch erzeugt und naßchemisch in die Al₂O₃-Schicht übertragen, so daß ein Streifen 7 aus Al₂O₃ entsteht, der von dem Fotolackstreifen 6 abgedeckt ist (siehe Figur 2b).

Durch Trockenätzen, beispielsweise mit einem N₂-Ionenstrahl, wird im nächsten Schritt der Streifen 7 aus Al₂O₃ durch die Deckschicht 5 in die 0,2 µm dicke Schicht 4 übertragen, in dem die vom Streifen 7 nicht abgedeckten und damit freiliegenden Teile des Oberflächengitters 50 in die Tiefe übertragen werden. Dabei überträgt sich das Oberflächengitter auch in die entstehenden Flanken bzw. Stufen 112 und 122, welche längsseitige Begrenzungsflächen einer durch den Streifen 7 definierten Rippe bilden. Diese Verfahrensstufe ist in der Figur 2b dargestellt.

Im nächsten Schritt wird erneut Fotolack 8 aufgetragen und fotolithografisch so strukturiert, daß auf der Seite, in die fokussiert wird, d.h. auf der Seite, auf welcher der Schichtwellenleiter 20 an den Rippenwellenleiter 10 angrenzt, der in die Tiefe übertragene Teil 51 des Oberflächengitters 50 mit diesem Lack 8 bedeckt ist. Bei diesem Schritt ist darauf zu achten, daß die Grenze 81 des Fotolacks 8 auf dem Ripppenwellenleiter 10 liegt. Das bedeutet, daß die Maske aus dem Fotolack 8 auf 1 µm genau justiert werden muß. Die entsprechende Verfahrensstufe ist in Figur 2c dargestellt.

In einem nächsten Schritt wird die 0,2 µm dicke Zwischenschicht 3 aus InP und die 0,7 µm dicke Schicht 2 aus InGaAsP auf der nicht maskierten Seite des Rippenwellenleiters 10 durch Trockenätzen abgetragen. Danach wird die ganze Fotolackmaske verascht und der Streifen 7 aus Al₂O₃ mit Flußsäure abgeätzt. Die entsprechende Verfahrensstufe ist in Figur 2d dargestellt. Bei dieser Stufe ist das Oberflächengitter noch in der gesamten Oberfläche des Schichtsystems vorhanden.

Das Oberflächengitter wird dann zusammen mit den beiden Schichten 3 und 5 aus InP naßchemisch durch selektives Ätzen in Salzsäure entfernt. Die entsprechende Endstufe ist in der Figur 2e dargestellt. Ein Gitter ist bei dieser Endstufe nur noch auf den längsseitigen Begrenzungsflächen 11 und 12 des Rippenwellenleiters 10 vorhanden, der durch die Schichten 3 und 4 und den unter diesen Schichten liegenden Bereich der Schicht 2 definiert ist. Der links angrenzende Bereich der Schicht 2 bildet den Schichtwellenleiter 20. Die verbliebenen Gitter auf den längsseitigen Begrenzungsflächen 11 und 12 bilden die gewünschten Gitter 110 und 120.

Bei einem Ausführungsbeispiel wurde eine Auskopplung unter α₀ = 45° bei einer Designwellenlänge λ₀ = 1550 nm gewählt. Die resultierende Gitterkonstante a für die Gitter 110 und 120 beträgt dabei etwa 280 nm. Bei einem gewünschten Abstand von 4 mm zum Fokalpunkt F₀ beträgt der minimale Krümmungsradius etwa 5,6 mm. Die zur Auskopplung erforderliche Länge L des Gitters beträgt ebenfalls etwa 4 mm. Die Kurvenform des gekrümmten Wellenleiters entspricht etwa einer logarithmischen Spirale. Für ein derartiges Bauteil ist ein Kanalabstand von 5 nm von einem Abstand der Fokalpunkte von 30 µm möglich. Die Kurvenform des Rippenwellenleiters wäre exakt eine logarithmische Spirale, wenn die Gitterkonstante a des Gitters auf der gesamten Länge L konstant wäre. Für ein vorgegebenes Gitter mit Chirp gibt es eine zugeordnete Kurvenform des Rippenwellenleiters, bei der die gleichen Verhältnisse vorliegen wie bei einer logarithmischen Spirale und einem Gitter mit fester Gitterkonstante. Dies gilt auch umgekehrt, d.h. zu jeder Kurvenform des Rippenwellenleiters gibt es ein zugeordnetes Gitter mit Chirp, bei dem ebenfalls die genannten Verhältnisse wieder vorliegen.

Bezogen auf das genannte Ausführungsbeispiel können bei größeren Kanalabständen auch kleinere Abmessungen für die Anordnung erzielt werden. So ergibt sich beispielsweise für einen Kanalabstand von 20 nm und einem Abstand der Fokalpunkte von 30 µm ein Abstand von 1 mm vom Beginn des Gitters bis zum betreffenden Fokalpunkt. Der Krümmungsradius am Beginn des Gitters ist dann nur noch 1,4 mm, so daß eine höhere Brechzahl für den Rippenwellenleiter gewählt werden muß, um Abstrahlungsverluste durch die Krümmungen zu vermeiden. Durch die damit einhergehende Erhöhung des Koppelwirkungsgrades wird die notwendige Koppellänge gleichzeitig etwas verringert.

Die in der Figur 3 dargestellte Anordnung unterscheidet sich von der aus der eingangs genannten Literaturstelle IEE Proc. im wesentlichen dadurch, daß die seitliche Begrenzungsfläche 13 des auf einem Substrat 100 aufgebrachten optischen Schichtwellenleiters 30 eine beispielsweise durch Ätzen erzeugte Stufe definiert, in die auch das fokussierende Gitter 130 geätzt ist, das vorzugsweise verspiegelt wird. Außerdem verläuft diese seitliche Begrenzungsfläche 13 in der zur Zeichenebene parallelen Ebene des Schichtwellenleiters 30 gekrümmt. Die entsprechenden Kurvenformen für die seitliche Begrenzungsfläche 13 sind aus der Literatur, beispielsweise J. Opt. Soc. Am., A2 (1985) S. 1793, bekannt. Die seitliche Begrenzungsfläche 13 und das Gitter 130 können nach einem Ätzverfahren hergestellt werden, wie es oben schon beschrieben worden ist.

## Patentansprüche

1. Anordnung für ein integriert optisches Spektrometer, mit einem optischen Schichtwellenleiter (30) und einem fokussierenden optischen Gitter (130) auf einer seitlichen Begrenzungsfläche (13) des Schichtwellenleiters (30), wobei die Gitterlinien (131) im wesentlichen vertikal zur Ebene des Schichtwellenleiters (30) sind, **dadurch gekennzeichnet**, daß die seitliche Begrenzungsfläche (13) des Schichtwellenleiters (30) eine Stufe definiert, in die das fokussierende Gitter (130) geätzt ist.

2. Anordnung nach Anspruch 1**, dadurch gekennzeichnet**, daß die seitliche Begrenzungsfläche (13) in der Ebene des Schichtwellenleiters (30) gekrümmt verläuft.

3. Anordnung nach Anspruch 2, **dadurch gekennzeichnet**, daß die seitliche Begrenzungsfläche (13) des Schichtwellenleiters (30) entsprechend einer logarithmischen Spirale gekrümmt verläuft.
